# EUROPÄISCHE PATENTANMELDUNG

(11) **EP 2 202 108 A1**
(43) Veröffentlichungstag der Anmeldung: **30.06.2010**
(21) Anmeldenummer: 09155632.4
(22) Anmeldetag: 19.03.2009
(51) Int. Cl.: B60J 1/20, B62D 31/02

(54) **Bestattungsfahrzeug mit Vario-Verglasung**

(30) Priorität: 23.12.2008 DE 102008063059; 26.02.2009 DE 102009003541
(71) Anmelder: Schmidt, Udo, 48734 Reken (DE)
(72) Erfinder: Schmidt, Udo, 48734 Reken (DE)
(74) Vertreter: Habbel, Ludwig

(57) **Zusammenfassung**

Die Erfindung schlägt einen Bausatz vor für ein einen Innenraum aufweisendes Fahrzeug, mit einer Fahrzeugkarosserie, welche zumindest einen Teil des Innenraums umgibt, einer Fensterscheibe, welche ebenfalls zumindest einen Teil des Innenraums umgibt, und mit wenigstens einer Blende (16,18-21,22,26-29), welche als separat von der Fensterscheibe handhabbares Bauteil der Fensterscheibe nahe benachbart montierbar ist, derart, dass sie die Fensterscheibe (7,8,30) zumindest teilweise abdeckt und somit Größe und Kontur des lichtdurchlässigen, als Fenster bezeichneten Anteils der Fensterscheibe bestimmt.

## Beschreibung

Die Erfindung betrifft einen Bausatz für ein Fahrzeug.

Bei vielen Fahrzeugen, insbesondere im Automobilbau, handelt es sich um in großen Serien von mehreren tausend Stück hergestellte Fahrzeuge, so dass unterschiedliche Fahrzeugvarianten wirtschaftlich gefertigt werden können, da sich eigens für die jeweilige Variante hergestellte Werkzeuge oder Fahrzeugteile wirtschaftlich rentieren.

Bei etlichen Fahrzeugen hingegen handelt es sich um Fahrzeuge, die in lediglich kleinen Serien herstellbar sind, seien es Bestattungs-, Sondereinsatz- oder Rettungsfahrzeuge, oder seien es Fahrzeuge außerhalb des Automobilbereichs. Selbst wenn diese Kleinserienfahrzeuge als Umbauten von Großserienfahrzeugen ausgeführt sind, um eine möglichst wirtschaftliche Herstellung des Fahrzeuges zu ermöglichen, bewirken die individuellen Umbauten, die an den Großserienfahrzeugen vorgenommen werden, dennoch einen vergleichsweise hohen Aufwand, der für die Herstellung eines Fahrzeuges erforderlich ist.

Hinzu kommt, dass diese in Kleinserien gefertigten Fahrzeuge wiederum in unterschiedlichen Varianten gefertigt werden, beispielsweise nach den Wünschen der Endkunden, so dass zu einem erheblichen Anteil eine rein handwerkliche Fertigung mit den entsprechenden wirtschaftlichen Nachteilen erfolgt.

Als typisches Beispiel für Kleinserienfahrzeuge werden nachfolgend Bestattungsfahrzeuge erwähnt, da sie stellvertretend für die wirtschatliche und technische Problemstellung dienen, ohnehin in vergleichsweise kleiner Serie hergestellt zu werden, und zudem innerhalb der Kleinserie auch an unterschiedliche Kundenbedürfnisse angepasst und differenziert zu werden.

In an sich bekannter Weise weist ein Bestattungsfahrzeug eine Fahrerkabine auf sowie einen Transportraum, der zur Aufnahme wenigstens eines Sarges vorgesehen ist, und der von der Fahrerkabine luftdicht abgetrennt sein kann. Das Bestattungsfahrzeug weist eine Karosserie auf, die den Transportraum umgibt, also an seinen beiden Längsseiten, nach oben und nach hinten, während der Transportraum nach vorne üblicherweise durch die Fahrerkabine und nach unten durch die Bodengruppe des Bestattungsfahrzeuges begrenzt ist.

Ein gattungsgemäßes Fahrzeug weist eine Fensterscheibe auf. Bei einem Bestattungsfahrzeug sind z. B. Fenster im Transportraum vorgesehen: aus der Praxis ist es bekannt, zwei vergleichsweise großformatige Seitenfenster vorzusehen, wobei unterschiedliche regionale Gepflogenheiten oder unterschiedliche Wünsche einzelner Bestattungsunternehmer unterschiedlich große Fensterflächen bevorzugen. Weiterhin kann in der Rückwand des Transportwagens, die üblicherweise als einteilige oder zweiteilige Heckklappe ausgestaltet ist, ein Rückfenster vorgesehen sein, und schließlich ist es aus der Praxis bekannt, im Dach des Transportraumes ein Fenster vorzusehen, welches beispielsweise aus einem nicht transparenten, sondern transluzenten Material besteht. In allen Fällen ist eine durch natürliches Licht ermöglichte Beleuchtung des Transportraumes gegeben, und bei Verwendung transparenter Fenstermaterialien wird zudem ein Blick in das Innere des Transportraumes ermöglicht, um beispielsweise im Rahmen von sogenannten Repräsentationsfahrten einen Anblick auf den geschmückten Sarg zu ermöglichen.

Bei Bestattungsfahrzeugen handelt es sich um Kleinserienfahrzeuge, selbst wenn diese zugunsten einer möglichst wirtschaftlichen Herstellung des Bestattungsfahrzeuges als Umbauten von Großserienfahrzeugen ausgeführt sind. Die individuellen Umbauten der Großserienfahrzeuge bewirken dennoch einen vergleichsweise hohen Aufwand, der für die Herstellung eines Bestattungsfahrzeuges erforderlich ist. Hinzu kommt, dass diese in Kleinserien gefertigten Fahrzeuge wiederum in unterschiedlichen Varianten gefertigt werden, beispielsweise nach den Wünschen der Bestattungsunternehmer, so dass zu einem erheblichen Anteil eine rein handwerkliche Fertigung mit den entsprechenden wirtschaftlichen Nachteilen erfolgt.

Der Erfindung liegt die Aufgabe zugrunde, eine möglichst wirtschaftliche Herstellung unterschiedlich ausgestalteter Fahrzeuge zu ermöglichen.

Diese Aufgabe wird durch einen Bausatz mit den Merkmalen des Anspruches 1 und durch ein Bestattungsfahrzeug mit den Merkmalen des Anspruches 18 gelöst.

Die Erfindung schlägt mit anderen Worten vor, mit besonders einfachen Mitteln ein hohes Maß an Individualisierung der Fahrzeuge dadurch zu ermöglichen, dass Fensterscheiben vorgesehen sind, die eine standardisierte Größe aufweisen können und die durch unterschiedliche, ggf. individuell angefertige, Blenden zumindest teilweise verdeckt werden können. Trotz der stets gleichen Fensterscheiben ergibt sich der Eindruck von Fahrzeugen mit unterschiedlichen Fenstern. Dabei ist im Rahmen des vorliegenden Vorschlags mit Fensterscheibe das lichtdurchlässige Material bezeichnet, beispielsweise Mineralglas oder Kunststoff, während als Fenster der optisch wirksame Anteil der Fensterscheibe bezeichnet ist, also der nicht von einer Blende verdeckte Anteil der Fensterscheibe. Die Blende kann dabei auf der vom Innenraum abgewandten Außenseite der Fensterscheibe oder auf der dem Innenraum zugewandten Innnenseite der Fensterscheibe vorgesehen sein.

Während es bekannt ist, Teile einer Fensterscheibe zu lackieren, ist vorschlagsgemäß vorgesehen, dass die Blende nicht in Form einer derartigen Lackierung, sondern als eigenes Bauteil ausgestaltet ist, welches separat von der Fensterscheibe gehandhabt wird.

Die Anfertigung der unterschiedlichen Blenden ist mit vergleichsweise einfachen Mitteln möglich, während die Verwendung von unterschiedlichen Fensterscheiben einen deutlich größeren wirtschaftlichen und fertigungstechnischen Aufwand darstellen würde. Vorschlagsgemäß kann ein hoher Individualisierungsgrad bei den Fahrzeugen in Bezug auf deren äußeres Erscheinungsbild bewirkt werden, und zwar bei gleichzeitig möglichst wirtschaftlicher Verwendung stets desselben Fahrzeugtyps, indem die optische Erscheinung des Fahrzeuges durch entsprechende Ausgestaltung der Fenster verändert wird. Bei Verwendung standardisierter Fensterscheiben wird ein sehr individueller Eindruck unterschiedlicher Verglasungen bei den vorschlagsgemäß hergestellten Fahrzeugen ermöglicht, so dass das optische Erscheinungsbild der Fahrzeuge in sehr wirtschaftlicher Weise sehr unterschiedlich ausgestaltet werden kann, indem entsprechend unterschiedliche Blenden verwendet werden.

Es bietet sich also an, einen Grundtyp eines bestimmten Fahrzeuges mit möglichst großen Fensterflächen zu konstruieren, so dass dann ausgehend von diesem Grundtyp die endgültige Erscheinung des Fahrzeugs dadurch bestimmt wird, ob die Fensterscheiben vollständig verdeckt werden oder zu welchem Anteil und mit welcher Formgestaltung sie von den Blenden verdeckt werden.

Dass dabei die Fenster zumindest zum Teil, wenn nicht gar vollständig verdeckt werden, ist unter Wirtschaftlichkeitsbetrachtungen kein Nachteil: Bei modernen Fahrzeugkonzepten kann vorgesehen sein, die Fensterscheiben als tragende Elemente in die Karosseriestruktur einzubinden und beispielsweise mit umgebenden Karosseriepartien zu verkleben. Insofern kann es in jedem Fall sinnvoll sein, die Fensterscheiben als mittragende Bauteile in der Fahrzeugstruktur vorzusehen, selbst wenn sie anschließend durch eine Blende vollständig verdeckt werden sollten, wenn nämlich der Kunde hinsichtlich der optischen Wirkung kein Fenster wünscht.

Vorteilhaft ist die Blende außen vor der Fensterscheibe montierbar. Dies erleichtert erstens die Fertigung des Fahrzeugs, und zweitens kann so in besonders vorteilhafter Ausgestaltung des vorliegenden Vorschlags die Blende einen Teil der Fahrzeugkarosserie bilden, so dass der Eindruck unterschiedlicher, selbständiger Fahrzeugvarianten besonders gut vermittelt werden kann.

Nachfolgend wird der vorliegende Vorschlag anhand eines Kleinserienfahrzeugs in Form eines Bestattungsfahrzeugs beschrieben, welches stellvertretend für andere Fahrzeugtypen von Kleinserienfahrzeugen steht. Typische Elemente eines Bestattungsfahrzeugs, welche andere Kleinserienfahrzeuge eventuell nicht aufweisen - wie z. B. einen Transportraum, insbesondere einen Transportraum für Särge - sind daher nicht als Einschränkungen des vorliegenden Vorschlags anzusehen, sondern dienen lediglich zur Erläuterung des gewählten Beispiels.

Eine vorschlagsgemäße Blende kann über einer im Dach des Transportraumes vorgesehenen Fensterscheibe angebracht sein, oder vor einer Seitenfensterscheibe des Transportraumes, oder vor einer Heckfensterscheibe. Dabei kann vorgesehen sein, die Heckfensterblende zweiteilig auszugestalten bzw. zwei Heckfensterblenden zu verwenden, wenn beispielsweise die Heckwand des Transportraums in Form einer zweiflügligen Heckklappe ausgestaltet ist, um eine besonders weite Zugangsöffnung im Fahrzeugheck zu schaffen. Alternativ kann in an sich bekannter Weise die Heckklappe als einteilige Heckklappe ausgestaltet sein, die um eine horizontale Achse nach oben schwenkbar ist, so dass diese einteilige Heckklappe besonders einfach zu handhaben ist.

Es kann grundsätzlich vorgesehen sein, bestehende Karosseriestrukturen des serienmäßig hergestellten Fahrzeuges zu verwenden und diese lediglich zur Schaffung eines ausreichend großen Transportraumes zu verlängern. In diesem Fall stellt die ursprüngliche Fahrzeugkarosserie einen Großteil der endgültigen Karosserieaussenfläche des Bestattungsfahrzeuges dar. In derartigen Fällen kann beispielsweise vorgesehen sein, die vorschlagsgemäßen Blenden lediglich auf den Fensterscheiben selbst anzubringen, beispielsweise mit den Fensterscheiben zu verkleben. Die Blenden können dabei bewusst von den angrenzenden Karosserieflächen abgegrenzt sein und z. B. als dekorative Elemente ausgestaltet sein. Sie können jedoch auch, um den Eindruck ganz unterschiedlicher Karosserievarianten zu ermöglichen, an die übrigen, bestehenden Karosserieflächen angrenzen, beispielsweise fugenlos oder mit Karosseriefugen,die in ihrer Breite und ihrem sonstigen Erscheinungsbild den übrigen am Bestattungsfahrzeug vorhandenen Karosseriefugen ähneln, beispielsweise den Karosseriefugen, die in den serienmäßig belassenen Bereichen des Fahrzeuges vorhanden sind.

Alternativ dazu kann besonders vorteilhaft eine Aufbauvariante gewählt werden, die einen besonders großen Spielraum bei der Karosseriegestaltung ermöglicht, beispielsweise indem das Bestattungsfahrzeug hinter der Fahrerkabine nicht großflächig die Karosserieflächen des Serienfahrzeuges nutzt, sondern vielmehr ein standardisiertes Gerüst aufweist, in welchem die Fensterflächen vorgesehen sind. Auf diese Weise können deutlich größere Fensterflächen gewählt werden als bei Verwendung und lediglich Verlängerung der originalen Karosserieteile des Großserienfahrzeuges. Das Gerüst mit seinen sehr großen Fensterscheiben erfordert eine anschließende Verkleidung, also die Anbringung von Karosserieflächen, und aufgrund der besonders großen möglichen Fensterflächen kann eine besonders große Gestaltungsvielfalt und Gestaltungsfreiheit bei der Ausgestaltung der Karosserieflächen und der verbleibenden, von den Blenden nicht verdeckten Fensterflächen ermöglicht werden.

Bei dieser Ausgestaltung ergibt sich insbesondere vorteilhaft die Möglichkeit, die Blende nicht als nachträglich angebrachtes Element erkennbar werden zu lassen. Vielmehr kann vorgesehen sein, drei einzelne, großflächige Blenden zu verwenden, von denen zwei die beiden Seitenwände des Transportraumes und die dort befindlichen Fensterscheiben - zumindest teilweise - abdecken, während ein drittes Element als obere Blende das Dach des Transportbereiches und eine dort vorgesehene Fensterscheibe - zumindest teilweise - abdeckt. Auf diese Weise sind drei einzeln handhabbare, zwar großflächige, aber vergleichsweise flache Blenden ermöglicht, die mit geringem Volumenbedarf transportiert und problemlos gehandhabt werden können.

Alternativ dazu kann vorgesehen sein, eine einzelne Blende vorzusehen, die einen etwa U-förmigen, nach unten offenen Querschnitt aufweist und sowohl die beiden Seitenwände als auch das Dach des Transportraumes umgibt. Eine derartige Blende ist fugenlos herstellbar und somit sowohl hinsichtlich der Karosseriesteifigkeit als auch hinsichtlich der Dichtigkeit, z. B. gegenüber Wassereintritt, optimal ausgestaltet. Ausgehend von dem selben Fahrzeugmodell, welches von einem Fahrzeughersteller angeliefert wird, kann diese einteilige Blende in einer für eine Kleinserie ansehnlich großen Stückzahl gefertigt werden und über das oben erwähnte Gerüst angebracht werden, welches mit den Fensterscheiben versehen ist. Die zuvor in die Blende eingebrachten Ausschnitte können nach individuellem Kundenwunsch ausgestaltet werden, so dass ein hohes Maß an Individualisierbarkeit bei vergleichsweise geringem Kostenaufwand ermöglicht wird.

Insbesondere wenn großformatige Blenden verwendet werden, wie oben beschrieben, kann es fertigungstechnisch vorteilhaft sein, die Fensterscheiben nicht am Fahrzeug zu befestigen, sondern vielmehr an der Blende. Dies kann beispielsweise besonders vorteilhaft erfolgen, nachdem die Ausschnitte in die Blende eingebracht wurden und die Blende ggf. lackiert wurde. Die Befestigung der Fensterscheiben kann dann entweder erfolgen, bevor die Blende am übrigen Fahrzeug befestigt wird, so dass eine optimale Zugänglichkeit zu den Stellen gewährleistet ist, an welchen die Fensterscheiben an der Blende befestigt werden sollen, oder die Befestigung der Fensterscheiben an der Blende kann erfolgen, wenn die Blende bereits am übrigen Fahrzeug befestigt wird, so dass in diesem Fall die großformatige Blende möglichst leichtgewichtig belassen wird, um sie für die Montage am übrigen Fahrzeug möglichst einfach handhaben zu können.

Werden transluzente statt transparente Fenster gewünscht, so ist dies auf einfache Weise auch dann möglich, wenn aus Gründen einer möglichst weitgehenden Standardisierung stets transparente Fensterscheiben verwendet werden, indem die Fensterscheiben mit einer entsprechend transluzenten Folie beklebt werden.

Vorteilhaft kann vorgesehen sein, mehrere unterschiedliche Blenden vor derselben Fensterscheibe anordnen zu können. Auf diese Weise ist mit wenigen Elementen eine Vielfalt unterschiedlicher Fensterformen realisierbar und insbesondere kann vorgesehen sein, eine als zu groß empfundene Fensterfläche durch das Ansetzen zusätzlicher Blenden zu verkleinern, oder es kann vorgesehen sein, durch Verwendung dieser mehreren Blenden zunächst eine kleine Fensterfläche zu schaffen, die dann bei Bedarf durch Entfernung einer oder mehrerer Blenden vergrößert werden kann.

Vorteilhaft kann die Blende als Kunststoffformteil ausgestaltet werden. Aus dem Bereich der Herstellung von kleinen bis mittelgroßen Serien, wie dies beispielsweise im Bootsbau der Fall ist, ist die Verarbeitung von glasfaserverstärktem Kunststoff als vorteilhaft bekannt. Dementsprechend kann in ähnlicher Weise die Herstellung eines GFK-Teils als Blende vorgesehen sein.

Alternativ kann vorgesehen sein, die Blende aus Blech zu fertigen, so dass beispielsweise der gleiche Werkstoff verwendet werden kann, wie für die übrigen Karosserieteile des großserienmäßig hergestellten Basisfahrzeuges.

Vorteilhaft kann die Blende in Karosseriefarbe eingefärbt sein. Unabhängig davon, ob die Blende außerhalb der Fensterscheibe, also "vor der Fensterscheibe" oder innerhalb des Innenraums, also "hinter der Fensterscheibe" angeordnet ist, wird durch diese Einfärbung eine optische Angleichung der Blende an die übrige Fahrzeugkarosserie ermöglicht, welche den Eindruck unterstützt, dass unterschiedliche Fahrzeugvarianten mit unterschiedlichen Karosserien geschaffen werden. Dieser Eindruck ist vorteilhaft dann besonders wirksam, wenn die Blende außerhalb der Fensterscheibe angeordnet wird und nicht nur auf die Abmessung der Fensterscheibe begrenzt ist sondern sich darüber hinaus erstereckt und einen Teil der Karosserie bildet, der an andere Karosserieteile angrenzt.

Dabei kann beispielsweise eine Lackierung der Blende vorgesehen sein, so dass beispielsweise Metallic-Lackierungen auf der Basiskarosserie sowie auf der Blende möglichst gleich aussehen. Insbesondere bei der Herstellung der Blende aus Kunststoff kann es allerdings auch vorgesehen sein, eine Gelcoat-Oberfläche zu schaffen, die - ähnlich wie aus dem Bootsbau bekannt - bereits in der Form eingefärbt werden kann, so dass beispielsweise bei schwarzen Bestattungsfahrzeugen die aus Metall bestehenden Karosserieteile lackiert sein können und die aus Kunststoff bestehende Blenden im gleichen Farbton eine schwarze Gelcoat-Oberfläche aufweisen können, so dass in wirtschaftlich vorteilhafter Weise eine Lackierung der Blenden nicht erforderlich ist.

Vorteilhaft kann der Transportraum luftdicht von der Fahrerkabine abgetrennt sein, so dass in hygienisch vorteilhafter Weise das Eindringen von Gasen aus dem Transportraum in den Fahrerraum ausgeschlossen ist.

Ausführungsbeispiele der Erfindung werden anhand der rein schematischen Darstellungen nachfolgend näher erläutert. Dabei zeigt
- Fig. 1: die Seitenansicht eines noch nicht fertiggestellten Kleinserien-Fahrzeugs, welches als Bestattungsfahrzeug ausgestaltet ist, mit den dabei vorgesehenen standardisierten Glasscheiben,
- Fig. 2: das Bestattungsfahrzeug von Fig. 1, mit Blenden versehen,
- Fig. 3: das Bestattungsfahrzeug von Fig. 1 in einer zweiten Ausführungsform, mit anderen Blenden als in Fig. 2,
- Fig. 4: das Bestattungsfahrzeug von Fig. 1 mit einer weiteren Variante von Blenden, die
- Fig. 5 und 6: zwei weitere Varianten von Blenden, und
- Fig. 7: einen Querschnitt durch den Übergangsbereich zwischen Seitenfläche und Dach bei einem vorschlagsgemäßen Bestattungsfahrzeug.

In den Zeichnungen ist jeweils mit 1 allgemein ein Bestattungsfahrzeug bezeichnet, welches auf einem Großserien-Fahrzeugmodell basiert, beispielsweise auf einem sogenannten Kombi, und welches eine vom Großserienmodell beibehaltene Fahrerkabine 2 aufweist. Hinter der Fahrerkabine 2 ist das Fahrzeug im Vergleich zur Großserie umgebaut worden, beispielsweise verlängert worden. An die Fahrerkabine 2 schließt sich bei den dargestellten Ausführungsbeispielsen nach hinten ein Transportraum 3 an, der von hinten durch eine nach oben öffnende, einteilige Heckklappe 4 zugänglich ist.

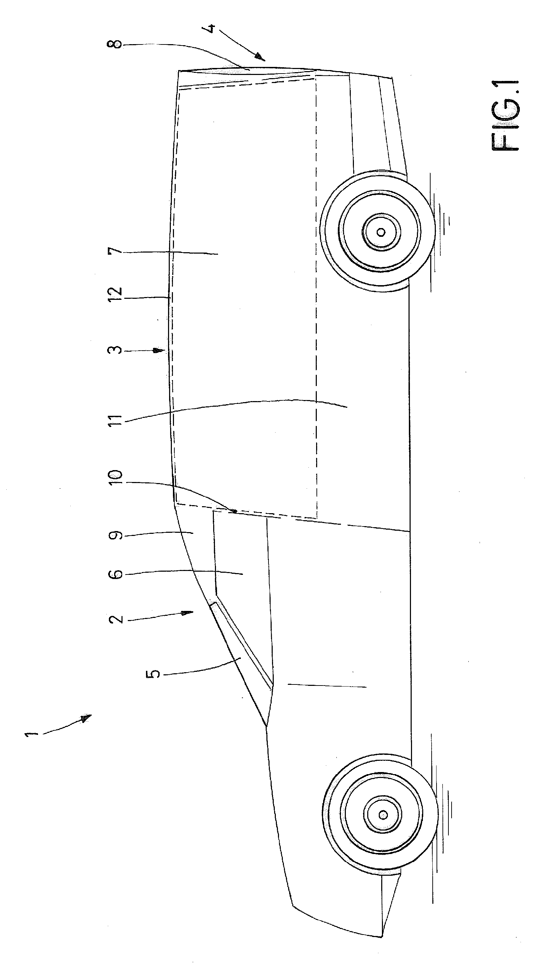

In Fig. 1 stellt das dargestellte Bestattungsfahrzeug einen Grundtyp bzw. eine Rohversion eines Kleinserienfahrzeugs dar, welches durch Blenden noch vervollständigt werden soll und dabei weiter individualisiert werden kann. Dabei sind in Fig. 1 die einzelnen Fensterscheiben des Bestattungsfahrzeuges 1 erkennbar, die standardisiert in einer maximalen Größe vorgesehen sind und durch unterschiedliche Blenden verdeckt werden können, wie weiter unten noch näher erläutert werden wird:

Eine Windschutzscheibe 5 ist vorgesehen, zwei Kabinenscheiben 6 der Fahrerkabine 2 sowie zwei Seitenscheiben 7 des Transportraumes 3, wobei sich diese Seitenscheiben 7 in vertikaler Richtung von den Radhäusern der Hinterräder bis in den Dachbereich des Bestattungsfahrzeuges 1 erstrecken, und in horizontaler Richtung über nahezu die gesamte Länge ds Transportraums 3. In der Heckklappe 4 ist eine hintere Heckscheibe 8 vorgesehen. Aus Fig. 1 nicht ersichtlich ist eine eventuell vorgesehene Fensterscheibe im Bereich des Fahrzeugdachs.

Auf beiden Seiten des Bestattungsfahrzeuges 1 ist jeweils eine Seitenscheibe 7 vorgesehen, wobei diese beiden Seitenscheiben 7 als Gleichteile ausgestaltet sind, so dass nur ein einziger Seitenscheibentyp hergestellt werden muss, um beide Seitenscheiben 7 auf beiden Seiten des Bestattungsfahrzeuges schaffen zu können.

Während die Windschutzscheibe 5 und die Kabinenscheiben 6 dem Großserienfahrzeug entsprechen, sind die Seitenscheiben 7 und die Heckscheibe 8 für den Sonderaufbau des Bestattungsfahrzeuges 1 vorgesehen und stellen die maximale Fensterfläche dar, die als lichtdurchlässiges Fenster im Bereich des Transportraumes 3 genutzt werden kann, abgesehen von einem eventuell vorgesehenen Fenster im Dach des Bestattungsfahrzeugs 1.

Die Seitenscheiben 7 erstrecken sich also höher als die Kabinenscheiben 6, so dass oberhalb der Kabinenscheiben 6 Karosserieflächen 9 vorgesehen sind, die sich etwa von der Windschutzscheibe 5 nach hinten erstrecken und an die Vorderkante der Seitenscheiben 7 grenzen. Hinter den Kabinenscheiben 6, auf gleicher Höhe, sind Karosserieflächen 10 vorgesehen, die sich horizontal von den Kabinenscheiben 6 bis zu den Seitenscheiben 7 erstrecken. Nach unten werden die Seitenscheiben 7 durch Karosserieflächen 11 begrenzt, die in Verlängerung der Türen nach hinten verlaufen und die Seitenflanken des Bestattungsfahrzeuges bilden, während die Seitenscheiben 7 nach oben durch Karosserieflächen 12 des Daches begrenzt werden.

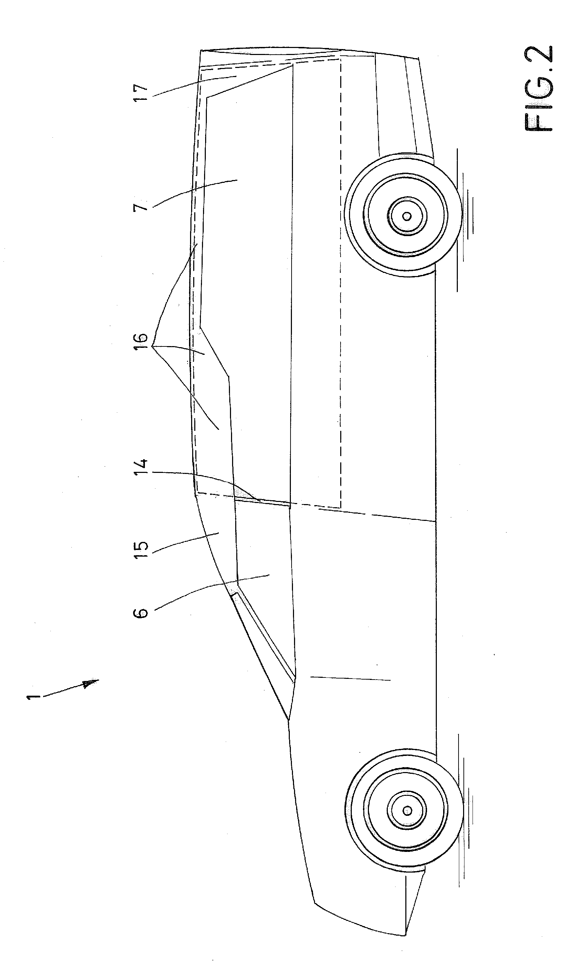

Fig. 2 zeigt das Bestattungsfahrzeug von Fig. 1, allerdings mit Blenden versehen: Seitlich nach hinten schließt sich an die Kabinenscheiben 6 jeweils eine Blende 14 an, welche die Karosseriefläche 10 verdeckt, hinter den Kabinenscheiben 6 dunkel lackiert ist und die Kabinenscheiben 6 somit optisch nach hinten bis zu den Seitenscheiben 7 verlängert. Oberhalb der Kabinenscheiben 6 ist eine Muldenabdeckung 15 vorgesehen. Die Muldenabdeckung 15 deckt die ansonsten vorhandene Mulde ab, die sich aufgrund einer Dachverbreiterung ergibt, die aus der Verbreiterung des Großserienfahrzeuges insbesondere im oberen Dachbereich von der serienmäßigen Fahrzeugbreite auf die für ein Bestattungsfahrzeug erforderliche Breite im Bereich des Transportraumes 3 resultiert. Die Muldenabdeckung 15 ist in Fahrzeugfarbe lackiert.

An die Muldenabdeckung 15 schließt sich nach hinten eine weitere Blende 16 an, welche die Seitenscheibe 7 teilweise verdeckt und somit einen optisch gestreckten Übergang von der Oberkante der Kabinenscheiben 6 zur Oberkante der Seitenfenster bewirkt. Als Seitenfenster wird dabei der jeweilige Anteil der Seitenscheiben 7 bezeichnet, der nicht durch Blenden verdeckt ist, so dass die Oberkanten der Seitenfenster bei dem in Fig. 2 dargestellten Ausführungsbeispiel niedriger liegen als die Oberkanten der tatsächlichen Seitenscheiben.

Die Blende 16 verläuft nach hinten bis zu einem hinteren Blendenbereich 17, in welchem sie sich über die gesamte Höhe der Seitenscheibe 7 erstreckt. Zudem verdeckt die Blende 16 den Dachbereich zumindest entlang der beiden Seiten des Daches, wo gemäß Fig. 1 Karosserieflächen 12 des Daches vorgesehen waren.

Ausgehend von dem Serienfahrzeug stellt das in Fig. 1 dargestellte Fahrzeug einen Umbau dar, allerdings im Rohzustand. Fig. 2 hingegen stellt das auslieferungsfertige Bestattungsfahrzeug dar, welches mit Hilfe der Muldenabdeckung 15 und insbesondere der Blenden 14 und 16 optisch gegenüber dem Bestattungsfahrzeug 1 der Fig. 1 abgewandelt ist.

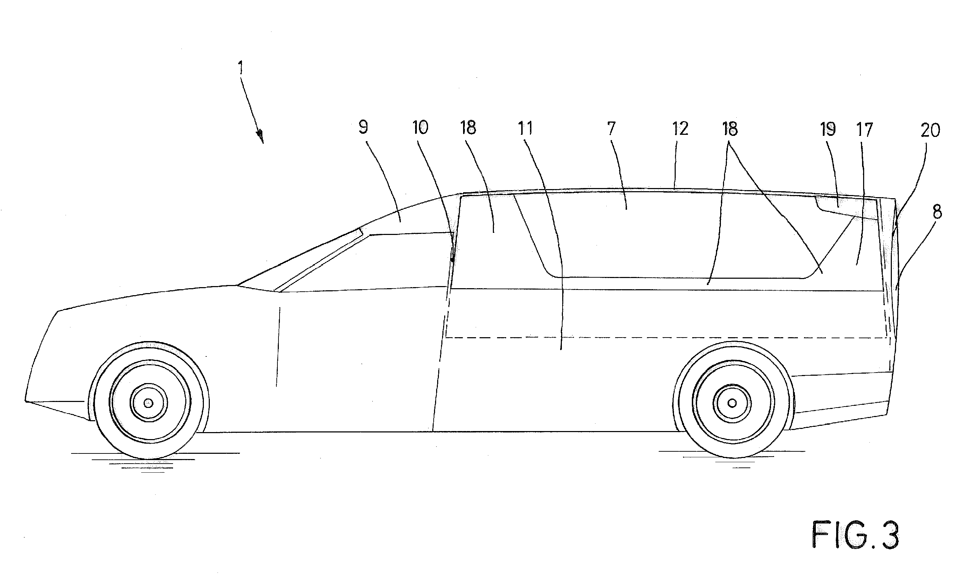

Eine weitere optische Abwandlung stellt das Bestattungsfahrzeug 1 nach Fig. 3 dar: Hier sind im Bereich der Karosserieflächen 9 und 10 keine Verkleidungen bzw. Blenden vorgesehen, und lediglich vor den Seitenscheiben 7 sind Blenden 18 und 19 vorgesehen, und auch vor der Heckscheibe 8 ist eine schmale obere Blende 20 vorgesehen, so dass die Kontur des verbleibenden Seitenfensters und die Karosseriegestaltung um den hinteren Blendenbereich 17 herum gegenüber dem Rohzustand nach Fig. 1 abgewandelt ist.

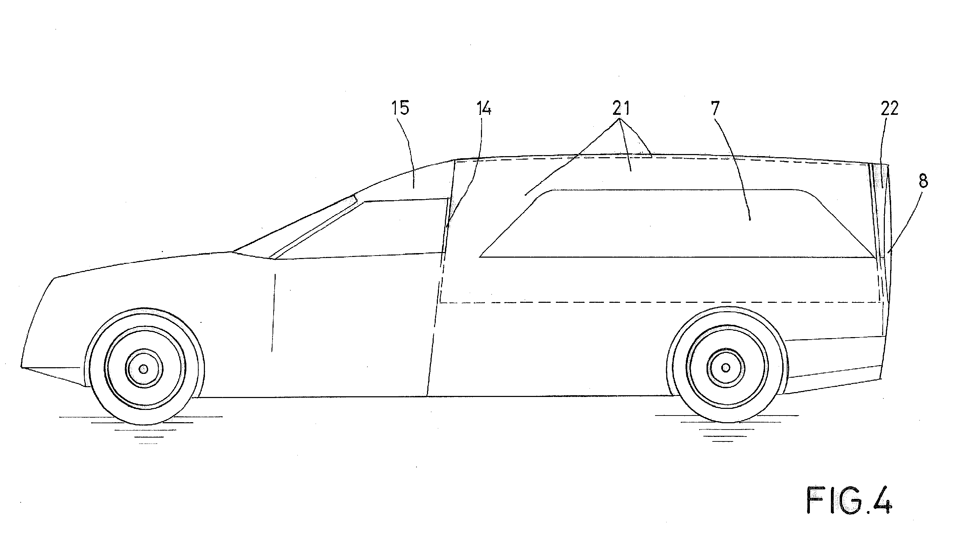

Fig. 4 zeigt eine weitere Abwandlung der Fahrzeuggestaltung: Hier sind ähnlich wie in Fig. 2 die Karosserieflächen 9 und 10 durch eine Blende 14 mit einer nach vorne ragenden Muldenabdeckung 15 verkleidet, und die Seitenscheiben 7 sind durch eine Blende 21 abgedeckt. Während die Blende 18 beim Ausführungsbeispiel der Fig. 3 als "nach oben offene" Blende bezeichnet werden kann, stellt die Blende 21 beim Ausführungsbeispiel der Fig. 4 eine "nach unten offene" Blende dar, was die optische Wirkung des jeweils geschaffenen Seitenfensters angeht. Beim Ausführungsbeispiel der Fig. 4 sind zudem schmale seitliche Randbereiche der Heckscheibe 8 durch eine bogenförmige, also auch quasi "nach unten offene", Blende 22 abgedeckt.

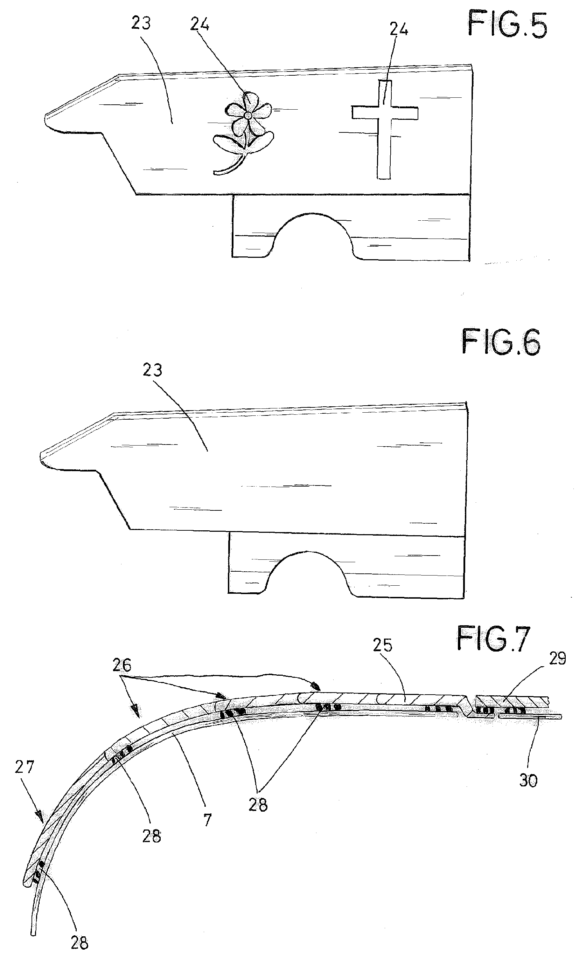

Die Fig. 5 und 6 zeigen jeweils eine einteilige Blende, die einen im wesentlichen U-förmigen, nach unten offenen Querschnitt aufweist und mit 23 bezeichnet ist. Diese einteilige Blende 23 deckt nicht nur die Seitenscheiben 7 des Bestattungsfahrzeuges 1 ab, sondern auch angrenzende Bereiche, so dass diese Blende 23 auch als den Transportraum 3 umgebende Karosseriefläche dort ausgestaltet ist, wo keine Fensterscheiben am Bestattungsfahrzeug 1 vorgesehen sind. Die Herstellung des Bestattungsfahrzeuges 1 wird insofern vereinfacht, als bei der Ergänzung des Serienfahrzeuges zusätzliche Karosserieflächen nicht aus Blech gearbeitet oder als separate Bauelemente hergestellt werden müssen, sondern aufgrund der ohnehin vorgesehenen Verwendung einer einteiligen Blende von dieser Blende 23 ebenfalls ausgebildet werden. So ist nur ein einziges Bauteil zu handhaben, zudem werden auch perfekte und dichte Übergänge dort sichergestellt, wo ansonsten separate Karosserieflächen aneinander genzen würden.

Bei dem Ausführungsbeispiel der Fig. 5 ist vorgesehen, dass die Blende 23 nicht nur einen Ausschnitt vor einer Seitenscheibe 7 aufweist, sondern zwei vergleichsweise klein bemessene Ausschnitte 24, so dass beispielsweise in Ländern mit hoher Sonneneinstrahlungsintensität eine unerwünschte Aufheizung des Transportraumes 3 vermieden wird, gleichzeitig jedoch eine Mindestbeleuchtung des Transportraumes durch Tageslicht sowie eine Betrachtung des Sarges im Transportraum ermöglicht wird.

Bei dem Ausführungsbeispiel der Fig. 6 weist die Blende 23 keinen Ausschnitt auf, so dass keine Seitenfenster geschaffen werden, obwohl die Verwendung von Fensterscheiben wie den Seitenscheiben 7 bei diesem Fahrzeug vorgesehen ist. Die Seitenscheiben 7 können vielmehr aus Gründen einer möglichst wirtschaftlichen, standardisierten Fahrzeugfertigung vorgesehen sein und zudem als mittragende Karosserieelemente für die Stabilität des Bestattungsfahrzeuges 1 erforderlich sein.

In Fig. 7 ist eine Seitenscheibe 7 teilweise angedeutet. Es ist ersichtlich, dass diese Seitenscheibe 7 im Bereich des Daches mit einem dort vorgesehenen Karosserieelement 25 verklebt ist. An das Karosserieelement 25 schließen sich möglichst fugenlos mehrere Blenden 26 und als Abschluss eine Blende 27 an, die einzeln montierbar und bei Bedarf auch wieder demontierbar sind. Die Montage erfolgt jeweils mit Hilfe von Klebstoff, der mit 28 angedeutet ist. Während die Verbindung der Seitenscheibe 7 mit dem Karosserieelement 25 mit einem dauerhaften und hochfesten Dichtungs- und Klebstoff 28 erfolgt, wird vorzugsweise für die Montage der Blenden 26 und 27 ein Klebstoff 28 geringerer Festigkeit verwendet, so dass diese Blenden 26 und 27 bei Bedarf problemlos demontierbar sind.

Das Karosserieelement 25 weist zum Dach hin einen Absatz auf, in welchen eine Blende 29 eingelegt ist. Rein beispielshaft ist bei dem dargestellten Ausführungsbeispiel vorgesehen, dass unterhalb des Karosserieelementes 25 im Dachbereich eine Fensterscheibe 30 anschließt, ähnlich wie dies bei der Seitenscheibe 7 am anderen Ende des Karosserieelementes 25 der Fall ist. Abweichend von dem dargestellten Ausführungsbeispiel kann vorgesehen sein, keine Fensterfläche im Dachbereich des Bestattungsfahrzeuges 1, insbesondere wenn diese auch nicht aus statischen Gründen erforderlich ist.

## Patentansprüche

1. Bausatz für ein einen Innenraum aufweisendes Fahrzeug, mit einer Fahrzeugkarosserie, welche zumindest einen Teil des Innenraums umgibt,
einer Fensterscheibe, welche ebenfalls zumindest einen Teil des Innenraums umgibt,
und mit wenigstens einer Blende (16, 18, 19, 20,21, 22, 26, 27, 29), welche als separat von der Fensterscheibe (7, 8) handhabbares Bauteil der Fensterscheibe (7, 8, 30) nahe benachbart montierbar ist, derart, dass sie die Fensterscheibe (7, 8, 30) zumindest teilweise abdeckt und somit Größe und Kontur des lichtdurchlässigen, als Fenster bezeichneten Anteils der Fensterscheibe bestimmt.

2. Bausatz nach Anspruch 1,
**dadurch gekennzeichnet,**
**dass** unterschiedliche Blenden (16, 18, 19, 20,21, 22, 26, 27, 29) vorgesehen sind, von denen wahlweise eine Blende (16, 18, 19, 20,21, 22, 26, 27, 29) Verwendung findet.

3. Bausatz nach Anspruch 1 oder 2,
**dadurch gekennzeichnet,**
**dass** die Blende (16, 18, 19, 20,21, 22, 26, 27, 29) außen vor der Fensterscheibe (7, 8, 30) montierbar ist.

4. Bausatz nach Anspruch 3,
**dadurch gekennzeichnet,**
**dass** die Blende (16, 18, 19, 20,21, 22, 26, 27, 29) einen Teil der Fahrzeugkarosserie bildet.

5. Bausatz nach einem der vorhergehenden Ansprüche,
**dadurch gekennzeichnet,**
**dass** das Dach des Fahrzeugs eine Fensterscheibe aufweist, welche mittels wenigstens einer Blende zumindest teilweise abdeckbar ist.

6. Bausatz nach einem der vorhergehenden Ansprüche,
**dadurch gekennzeichnet,**
**dass** das Fahrzeug (1) an einer Seitenwand eine Fensterscheibe aufweist, welche mittels wenigstens einer Blende zumindest teilweise abdeckbar ist.

7. Bausatz nach einem der vorhergehenden Ansprüche,
**dadurch gekennzeichnet,**
**dass** das Fahrzeug (1) an der Rückwand eine Fensterscheibe aufweist, welche mittels wenigstens einer Blende zumindest teilweise abdeckbar ist.

8. Bausatz nach einem der vorhergehenden Ansprüche,
**dadurch gekennzeichnet,**
**dass** das Fahrzeug (1) ein den Innenraum zumindest teilweise umgebendes Gerüst aufweist,
wobei das Gerüst wenigstens eine Fensterscheibe sowie wenigstens eine Karosseriefläche trägt.

9. Bausatz nach Anspruch 8,
**dadurch gekennzeichnet,**
**dass** die Karosseriefläche außerhalb des Gerüstes angeordnet ist.

10. Bausatz nach einem der vorhergehenden Ansprüche,
**dadurch gekennzeichnet,**
**dass** die Blende einteilig ausgestaltet ist und sich über zwei gegenüberliegende Seitenwände und ein Dach des Fahrzeugs erstreckt.

11. Bausatz nach einem der vorhergehenden Ansprüche,
**dadurch gekennzeichnet,**
**dass** die Blende (16, 18, 19, 20,21, 22, 26, 27, 29) an die übrige Karosserie des Fahrzeugs anschließt und ihrerseits als Karosserieteil ausgestaltet ist.

12. Bausatz nach einem der vorhergehenden Ansprüche,
**gekennzeichnet durch**
mehrere unterschiedliche Blenden (26, 27), von denen eine oder mehrere vor einer Fensterscheibe montierbar sind.

13. Bausatz nach einem der vorhergehenden Ansprüche,
**dadurch gekennzeichnet,**
**dass** die Blende (16, 18, 19, 20,21, 22, 26, 27, 29) als Kunststoffformteil ausgestaltet ist.

14. Bausatz nach einem der Ansprüche 1 bis 12,
**dadurch gekennzeichnet,**
**dass** die Blende (16, 18, 19, 20,21, 22, 26, 27, 29) aus Blech besteht.

15. Bausatz nach einem der vorhergehenden Ansprüche,
**dadurch gekennzeichnet,**
**dass** die Blende (16, 18, 19, 20,21, 22, 26, 27, 29) in Karosseriefarbe eingefärbt ist.

16. Bausatz nach einem der vorhergehenden Ansprüche,
**dadurch gekennzeichnet,**
**dass** das Fahrzeug eine bewegliche Heckklappe (4) aufweist.

17. Bausatz nach einem der vorhergehenden Ansprüche,
**dadurch gekennzeichnet,**
**dass** zwei Seitenfenster vorgesehen sind,
wobei die beiden zur Schaffung der Seitenfenster verwendeten Seitenscheiben (7) Gleichteile sind.

18. Bestattungsfahrzeug (1), welches mittels eines Bausatzes nach einem der vorhergehenden Ansprüche hergestellt ist,
mit einer Fahrerkabine,
einem Transportraum, der zur Aufnahme wenigstens eines Sarges bemessen ist,
einer Karosserie, welche den Transportraum an seinen beiden Längsseiten mittels Seitenwänden, nach oben mittels eines Daches und nach hinten mittels einer Rückwand umgibt,
wobei an den beiden Längsseiten, oberhalb oder hinter dem Transportraum eine Fensterscheibe (7, 8, 30) vorgesehen ist,
und wobei wenigstens eine Blende (16, 18, 19, 20,21, 22, 26, 27, 29) vorgesehen ist, welche diese Fensterscheibe (7, 8, 30) zumindest teilweise verdeckt.
